# EUROPÄISCHE PATENTSCHRIFT

(11) **EP 1 421 355 B1**
(45) Veröffentlichungstag und Bekanntmachung des Hinweises auf die Patenterteilung: **25.01.2012**
(21) Anmeldenummer: 02796252.1
(22) Anmeldetag: 21.08.2002
(51) Int. Cl.: B60G 17/019, G01L 5/20, B60B 27/00, B60G 17/015, G01L 5/00, F16C 19/38

(54) **EINRICHTUNG ZUR ERMITTLUNG VON AUF DIE RADAUFHÄNGUNG EINES RADES EINES FAHRZEUGES EINWIRKENDEN KRÄFTEN UND/ODER MOMENTEN**
DEVICE FOR DETERMINING THE FORCES AND/OR TORQUES THAT ACT UPON THE WHEEL SUSPENSION OF A VEHICLE
DISPOSITIF POUR DETERMINER DES FORCES ET/OU DES MOMENTS S'EXERCANT SUR LA SUSPENSION D'UNE ROUE DANS UN VEHICULE

(30) Priorität: 23.08.2001 DE 10141252
(43) Veröffentlichungstag der Anmeldung: 26.05.2004
(73) Patentinhaber: KNORR-BREMSE Systeme für Nutzfahrzeuge GmbH, 80809 München (DE)
(72) Erfinder: BAUMGARTNER, Johann, 85368 Moosburg (DE)
(86) Internationale Anmeldenummer: PCT/EP2002/009335
(87) Internationale Veröffentlichungsnummer: WO 2003/019126

(56) Entgegenhaltungen:
- EP-A- 0 432 122
- EP-A- 0 534 537
- EP-A- 0 668 491
- DE-A- 19 919 006
- US-A- 4 748 844
- US-A- 4 821 582
- US-A- 5 827 956
- US-A- 6 002 248

## Beschreibung

Die vorliegende Erfindung betrifft eine Einrichtung zur Ermittlung von auf die Radaufhängung eines Rades eines Fahrzeuges einwirkenden Kräften und/oder Momenten gemäß dem Oberbegriff des Anspruchs 1.

Aus der EP 0 726 468 A1 ist es bekannt, an den Rädern eines Fahrzeuges, insbesondere eines Kraftfahrzeuges, Drehzahlsensoren anzubringen, mit denen die Drehzahlen der jeweiligen Räder erfaßt und in einer Steuereinheit, beispielsweise einem Anti-Blockier-System, ausgewertet werden zur Beeinflussung der Bremsung oder Beschleunigung.

Allerdings ist eine Veränderung der Brems- bzw. Vortriebskräfte nur bei einer Änderung der Raddrehzahl erkennbar, was einer Optimierung einer entsprechenden Steuerung entgegensteht.

Darüber hinaus sind mit den Drehzahlsensoren lediglich dadurch bedingte Veränderungen erkennbar, nicht jedoch solche, die drehzahlunabhängig sind, wie beispielsweise auf die Räder wirkende Gewichtsbelastungen oder dergleichen.

In der gattungsbildenden EP-A-0 432 122 A2, der EP-A-0 668 491 sowie der US-A-4 748 844 ist jeweils eine Einrichtung geoffenbart, die Kraftsensoren aufweist, mit denen einwirkende Kräfte und/oder Momente ermittelbar sind.

In der letztgenannten Literatur ist zwar angegeben, dass ein Drehwinkel messbar ist, jedoch dient diese Drehwinkelmessung der Ermittlung von wirksamen Momenten, die auf einen Fahrzeugreifen einwirken. Eine Drehzahlmessung ist dadurch nicht möglich.

Der vorliegenden Erfindung liegt die Aufgabe zugrunde, eine Einrichtung der gattungsgemäßen Art so auszubilden, daß eine genauere Erkennung der auftretenden Belastungen möglich ist und alle wesentlichen Belastungsarten erkennbar sind.

Diese Aufgabe wird durch eine Einrichtung gelöst, die die Merkmale des Anspruchs 1 aufweist.

Mit Hilfe einer solchen Einrichtung, bei der die Kraftsensoren nach einer vorteilhaften Weiterbildung konzentrisch und in gleichem Winkelabstand zueinander angeordnet sind, können praktisch alle belastungsbedingten Veränderungen innerhalb der Radaufhängung festgestellt werden. Dabei wird eine durch die Belastung auftretende Deformierung des Achszapfens und eine damit einhergehende Lageveränderung der damit in Wirkverbindung stehenden Bauteile erkannt und entsprechend ausgewertet.

Bei einem unbelasteten Rad wirken aufgrund der axialen Vorspannung des Radlagers durch den Vorspannring gleich große Kräfte auf die einzelnen Kraftsensoren, so daß diese jeweils den gleichen Meßwert anzeigen.

Bei einer Belastung des Rades in vertikaler Richtung wird der Achszapfen so verformt, daß über die dadurch bedingte Lageveränderung des Radlagers der oder die oberhalb der Achszapfenlängsachse angeordneten Kraftsensoren stärker belastet werden als die unteren, was durch unterschiedliche Anzeigen erkennbar ist.

In diesem Sinne sind auch auftretende Längskrafte ermittelbar, wie sie beispielsweise beim Bremsen auftreten. Hierbei erfolgt eine Deformierung des Achszapfens in der Form, daß die in Fahrtrichtung gesehen hinter dem Achszapfen liegenden Kraftsensoren mit einem höheren Druck beaufschlagt werden, während die Vorspannung der gegenüberliegenden reduziert ist.

Es ist somit möglich, alle am Rad wirksamen Kräfte unmittelbar zu erfassen, wobei nach einem weiteren Gedanken der Erfindung die Kraftsensoren in einen Kraftmeßring integriert sind, so daß sich ein einstückiges Bauteil ergibt, das auch als offener Ring ausgebildet sein kann.

Die Kraftsensoren, die sozusagen eine Kraftmeßzone definieren, können als orthogonal belastete druckempfindliche Widerstände, als Dehnwiderstände, hydrostatische Druckmeßelemente, faseroptische Druckspannungselemente oder dergleichen ausgebildet sein bzw. nach entsprechenden Meßprinzipien funktionieren.

Die Signale der Kraftsensoren sind zur Antriebs- und Bremsenregelung verwendbar, wobei gegenüber den eingangs genannten Drehzahlsensoren Veränderungen der Brems- bzw. Beschleunigungskräfte unmittelbar erkannt werden und nicht erst bei Änderung der Raddrehzahl.

Darüber hinaus kann durch die erfindungsgemäße Einrichtung der Beladungszustand des Fahrzeuges über die Erfassung der Radlast der einzelnen Räder erkannt werden. Dies ist gleichermaßen beim Auftreten dynamischer Vertikalbeanspruchungen auf die Radaufhängung möglich, wie sie beispielsweise infolge von Fahrbahnunebenheiten oder durch Veränderungen der statischen Radlast möglich ist. In idealer Weise kann das letztere Signal zur Beeinflussung des Federungs- und Dämpfungsverhalten des Federungssystemes genutzt werden.

Die z. B. bei Kurvenfahren auftretenden Querkräfte führen zu einer Veränderung des Meßwertes der Kraftsensoren, wobei die Veränderung der Kraftsensoren des kurveninneren Rades den Veränderungen der Meßwerte an den Kraftsensoren des kurvenäußeren Rades entgegengesetzt sind. Die so ermittelten Meßdaten können zur Verwertung in einem elektronischen Stabilitätsprogramm (ESP) genutzt werden, wodurch dieses Programm optimiert wird.

Weiter besteht die Möglichkeit, die Meßsignale der Kraftsensoren auch für die Einstellung der Vorspannkraft des auf das Radlager wirkenden Vorspannringes einzusetzen. Dadurch werden große Streuungen der Vorspannkraft vermieden, wie sie bei den bisher bekannten Messungen des Anzugsdrehmomentes entstehen. Darüber hinaus bieten die Kraftsensoren die Möglichkeit, den Vorspannungszustand des Radlagers während des Betriebs zu überwachen und bei unzulässigen Abweichungen eine entsprechende Serviceinformation zu geben.

Erfindungsgemäß ist der an sich bekannte Drehzahlsensor mit den neuen Kraftsensoren zu einer Baueinheit zusammengefasst. Dabei kann eine solche Baueinheit in eine Kraftmeßdose bzw. einen Kraftmeßring, unabhängig von anderen Fahrzeugaggregaten wie der Bremse, der Radnabe oder dergleichen eingebaut werden, wobei dieses Bauteil eine insbesondere gegenüber äußeren Einflüssen geschützte Position einnimmt.

Weitere vorteilhafte Ausbildungen der Erfindung sind in den Unteransprüchen gekennzeichnet.

Ein Ausführungsbeispiel der Erfindung wird nachfolgend anhand der Zeichnungen beschrieben.

Es zeigen:
- Figur 1: eine mit einer erfindungsgemäßen Einrichtung ausgestattete Radaufhängung in einem Längsschnitt in unbelasteter Stellung,
- Figur 2: einen Teilquerschnitt durch die Radaufhängung gemäß der Linie II-II in Figur 1,
- Figur 3: einen Längsschnitt durch die Radaufhängung in belasteter Stellung.

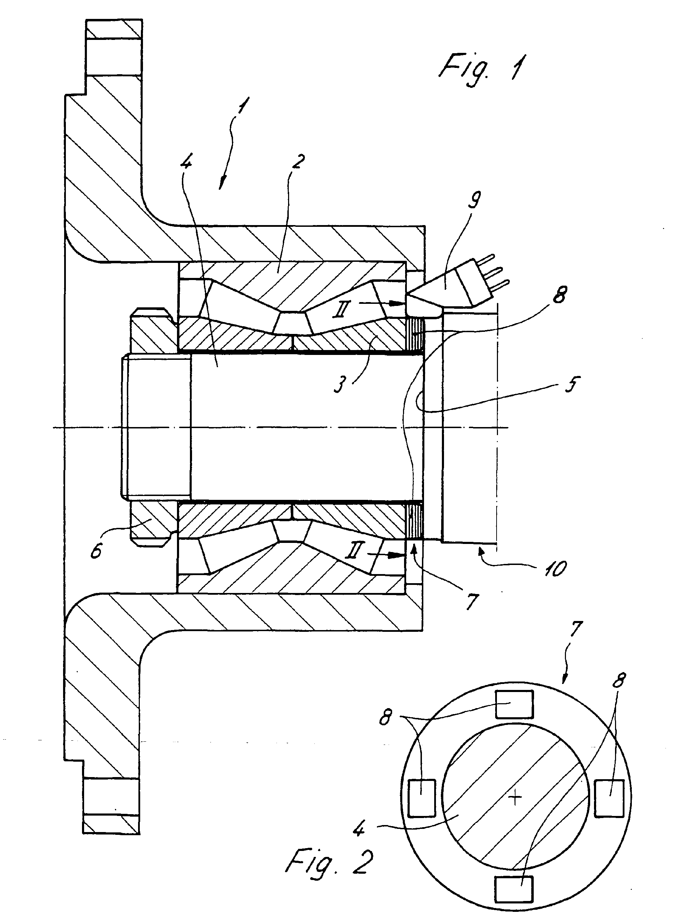

In den Figuren 1 und 2 ist eine Radaufhängung dargestellt, die in ihrem Grundaufbau aus einer Nabe 1 eines nicht weiter dargestellten Rades, einem Achszapfen 4, einer Achse 10 sowie einem Radlager 2 besteht, das in der Nabe 1 angeordnet ist und sich an dem Achszapfen 4 mit einem Innenring 3 abstützt.

Über einen auf den Achszapfen 4 aufgeschraubten Vorspannring 6 wird das Radlager 2 mittelbar gegen eine Achsschulter 5 gedrückt und zwar im Bereich des Innenringes 3, an dem auch der Vorspannring 6 anliegt.

Im vorliegenden Ausführungsbeispiel ist zwischen dem Radlager 2, an dem Innenring 3 anliegend, und der Achsschulter 5 eine Kraftmeßdose 7 angeordnet, die mehrere Kraftsensoren 8 aufweist. Diese sind, wie die Figur 2 sehr deutlich zeigt, konzentrisch in gleichem Winkelabstand zueinander angordnet, wobei im vorliegenden Ausführungsbeispiel vier Kraftsensoren 8 vorgesehen sind, die mit einem elektrischen Anschluß 9 versehen sind, der wiederum an eine fahrzeugseitige Auswerteeinheit, die nicht dargestellt ist, anschließbar ist.

In unbelasteter Stellung, wie sie die Figur 1 wiedergibt, sind durch den Vorspannring 6 alle Kraftsensoren 8 gleichmäßig belastet. Dabei verläuft der Achszapfen 4 genau rechtwinklich zur Achsschulter 5.

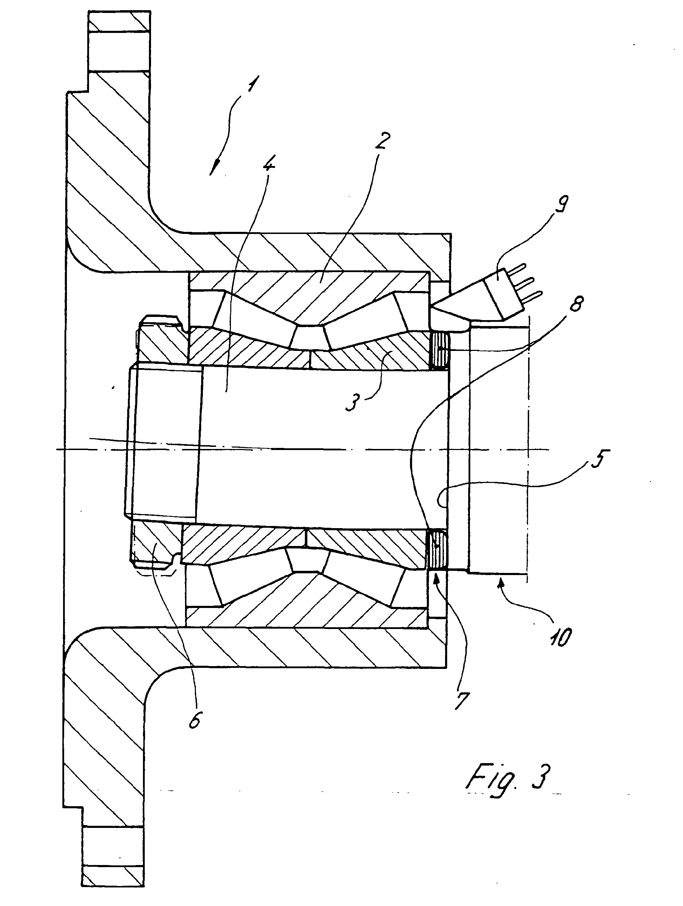

Im Fall einer Belastung, beispielsweise durch Beladung des Fahrzeuges, wird ein Drehmoment wirksam, das zu einer Deformation des Achszapfens 4 führt, wie sie in der Figur 3 strichpunktiert dargestellt zu erkennen ist.

Durch diese Deformation des Achszapfens 4 erfolgt eine Auslenkung des Vorspannringes 6 mit einer Verkürzung des Abstandes zwischen der Achsschulter 5 im oberen Bereich und der an dem Innenring 3 des Radlagers 3 anliegenden Andruckfläche des Vorspannringes 6, wodurch ein Druck auf den oder die in diesem Bereich angeordneten Kraftsensoren 8 erfolgt, währenddessen die unterhalb der Mittellängsachse der Achse 10 angeordneten Kraftsensoren 8 entsprechend entlastet werden. Diese eintretenden Druckunterschiede werden festgestellt und entsprechend ausgewertet.

Wie erwähnt, ist durch die Kraftsensoren 8 nicht nur eine wirksame Belastung der Radaufhängung in vertikaler Richtung, sondern auch in anderen Richtungen feststellbar.

Auch kann die Plazierung der ringförmigen Kraftmeßdose statt zwischen dem Radlager 2 und der Achsschulter 5 zwischen dem Radlager 2 und dem Vorspannring 6 erfolgen mit der prinzipiell gleichen Wirkung wie beschrieben. Im Bedarfsfall besteht auch die Möglichkeit, an jeder der genannten Stellen einen Kraftsensor 8 zu montieren.

### Bezugszeichenliste

- 1: Nabe
- 2: Radlager
- 3: Innenring
- 4: Achszapfen
- 5: Achsschulter
- 6: Vorspannung
- 7: Kraftmeßdose
- 8: Kraftsensor
- 9: elektrischer Anschluß
- 10: Achse

## Patentansprüche

1. Einrichtung zur Ermittlung von auf die Radaufhängung eines Rades eines Fahrzeuges einwirkenden Kräften und/oder Momenten, wobei das Rad mit seiner Nabe (1) auf einem Achszapfen (4) einer Fahrzeugachse (10) mittels eines Radlagers (2) drehbar gelagert ist und das Radlager (2) durch einen Vorspannring (6) gegen eine Achsschulter (5) gedrückt ist sowie zwischen dem Radlager (2) und der Achsschulter (5) und/oder zwischen dem Radlager (2) und dem Vorspannring (6) und/oder zwischen Lagerinnenringen (3) mehrere, diese jeweils direkt oder indirekt kontaktierende Kraftsensoren (8) angeordnet sind, **dadurch gekennzeichnet, daß** die Kraftsensoren (8) und ein Drehzahlsensor als Baueinheit vorgesehen sind.

2. Einrichtung nach Anspruch 1, **dadurch gekennzeichnet, daß** die Kraftsensoren (8) konzentrisch zur Längsachse der Fahrzeugachse (1) angeordnet sind.

3. Einrichtung nach Anspruch 1 oder 2, **dadurch gekennzeichnet, daß** die Kraftsensoren (8) in einer ringförmigen Kraftmeßdose (7) angeordnet sind.

4. Einrichtung nach Anspruch 1, **dadurch gekennzeichnet, daß** die Kraftsensoren (8) direkt oder indirekt am Innenring des Radlagers (2) anlegen.

5. Einrichtung nach Anspruch 1, **dadurch gekennzeichnet, daß** die Kraftsensoren (8) über einen elektrischen Anschluß (9) an eine Auswerteeinrichtung angeschlossen sind.

6. Einrichtung nach Anspruch 1, **dadurch gekennzeichnet, daß** die Kraftsensoren als orthogonal belastete, druckempfindliche Widerstände, als Dehnwiderstände, hydrostatische Druckmeßelemente, faseroptische Druckspannungselemente oder dergleichen ausgebildet sind.

7. Einrichtung nach Anspruch 1, **dadurch gekennzeichnet, daß** die Kraftsensoren in gleichem Winkelabstand zueinander angeordnet sind.

## Claims

1. Device for determining forces and / or torques acting on the wheel suspension of a vehicle, wherein the wheel is rotationally mounted with its hub (1) on a kingpin (4) of a vehicle axle (10) by means of a wheel bearing (2) and the wheel bearing (2) is pressed by a tensioning ring (6) against an axle shoulder (5) and a plurality of force sensors (8) are arranged between the wheel bearing (2) and the axle shoulder (5) and / or between the wheel bearing (2) and the tensioning ring (6) and / or between bearing inner rings (3), thereby contacting them directly or indirectly, **characterised in that** the force sensors (8) and a speed sensor are provided as a structural unit.

2. Device according to claim 1, **characterised in that** the force sensors (8) are arranged concentrically with the longitudinal axis of the vehicle axle (1).

3. Device according to claim 1 or 2, **characterised in that** the force sensors (8) are arranged in a ring-shaped force measuring capsule (7).

4. Device according to claim 1, **characterised in that** the force sensors (8) lie directly or indirectly against the inner ring of the wheel bearing (2).

5. Device according to claim 1, **characterised in that** the force sensors (8) are connected via an electrical connection (9) to an evaluating device.

6. Device according to claim 1, **characterised in that** the force sensors are formed as orthogonally loaded, pressure sensitive resistors, as strain resistors, hydrostatic pressure measuring elements, fibre optic compressive stress elements or similar.

7. Device according to claim 1, **characterised in that** the force sensors are arranged at the same angular distance from each other.

## Revendications

1. Dispositif de détermination de forces et/ou de couples agissant sur la suspension d'une roue d'un véhicule, dans lequel la roue est montée tournante par son moyeu (1) sur un tourillon (4) d'un essieu (10) de véhicule au moyen d'un roulement (2) de roue et le roulement (2) de roue est repoussé par un anneau (6) de précontrainte sur un épaulement (5) de l'essieu, tandis que, entre le roulement (2) de roue et l'épaulement (5) d'essieu et/ou entre le roulement (2) de roue et l'anneau (6) de précontrainte et/ou entre des bagues (3) intérieures de roulement sont disposés plusieurs capteurs (8) de force les contactant respectivement directement ou indirectement, **caractérisé en ce que** les capteurs (8) de force et un capteur de vitesse de rotation sont prévus sous la forme d'une unité de construction.

2. Dispositif suivant la revendication 1, **caractérisé en ce que** les capteurs (8) de force sont disposés concentriquement à l'axe longitudinal de l'essieu (1) du véhicule.

3. Dispositif suivant la revendication 1 ou 2, **caractérisé en ce que** les capteurs (8) de force sont disposés dans une boîte (7) dynamométrique annulaire.

4. Dispositif suivant la revendication 1, **caractérisé en ce que** les capteurs (8) de force s'appliquent directement ou indirectement à la bague intérieure du roulement (2) de roue.

5. Dispositif suivant la revendication 1, **caractérisé en ce que** les capteurs (8) de force sont raccordés à un dispositif d'exploitation par une connexion (9) électrique.

6. Dispositif suivant la revendication 1, **caractérisé en ce que** les capteurs de force sont constitués sous la forme de résistances chargées orthogonalement et sensibles à la pression, sous la forme de résistances de dilatation, d'éléments de mesure de pression hydrostatique, d'éléments de contrainte de pression à fibre optique ou analogues.

7. Dispositif suivant la revendication 1, **caractérisé en ce que** les capteurs de force sont disposés à un même intervalle angulaire.
